# EUROPEAN PATENT SPECIFICATION

(11) **EP 3 397 447 B1**
(45) Date of publication and mention of the grant of the patent: **27.04.2022**
(21) Application number: 15831234.8
(22) Date of filing: 29.12.2015
(51) Int. Cl.: B29C 44/24, B29C 70/68, B29C 70/88, B29C 44/32, B29C 44/44, B29K 105/04, B29K 25/00, B29L 31/10

(54) **APPARATUS AND PROCESS FOR THE MANUFACTURING OF COMPOSITE FORMWORK BUILDING MEMBERS AND FORMWORK MEMBERS SO MANUFACTURED**
VORRICHTUNG UND VERFAHREN ZUR HERSTELLUNG VON VERBUNDSCHALUNGSBAUELEMENTEN UND DADURCH HERGESTELLTE SCHALUNGSELEMENTE
APPAREIL ET PROCÉDÉ DE FABRICATION D'ÉLÉMENTS DE CONSTRUCTION À COFFRAGE COMPOSITE ET ÉLÉMENTS COFFRAGE AINSI FABRIQUÉS

(43) Date of publication of application: 07.11.2018
(73) Proprietor: PLASTEDIL S.A., 6850 Mendrisio (CH)
(72) Inventor: CRETTI, Piero, 6835 Morbio Superiore (CH)
(74) Representative: Concone, Emanuele
(86) International application number: PCT/IB2015/060018
(87) International publication number: WO 2017/115106

(56) References cited:
- EP-A2- 0 747 193
- EP-A2- 1 967 344
- WO-A1-2011/042772
- DE-A1-102011 107 964
- US-A1- 2015 224 687

## Description

The present invention generally relates to the field of prefabricated building members for constructions and particularly to an apparatus and a process for the manufacturing of composite formwork building members, i.e. formwork members for constructions comprising a metal structure associated with a member made of an expanded polymeric material.

In the field of construction the use of building members made of an expanded polymeric material, in particular expanded polystyrene (EPS), in the form of slabs and drawn products has long been known. These structural members primarily serve as thermal and acoustic insulation means.

In order to provide these building members with an adequate load bearing capacity it is necessary to embed one or more suitably shaped, metal reinforcement members in the expanded polymeric material, thereby obtaining building members of a "composite" type that can be used for the manufacturing of walls, house ceilings, as well as floor and roof ceilings.

There are known composite building members configured as formwork members intended to receive a concrete casting. These formwork members comprise two panels made of high-density, expanded polystyrene, joined and spaced apart from one another by a plurality of truss metal structures arranged parallel to one another in a longitudinal direction and intended to form the reinforcement of a concrete cast poured therein. A first formwork panel intended to face the outside of a structure has a thickness in the order of 20 cm, while a second formwork panel intended to face the inside of the same structure has a thickness lower than the thickness of the first formwork panel, e.g. in order of 5 cm.

Formwork members of this type are defined "single-use formwork members" because their expanded polystyrene panels, used as a means for containing a concrete cast, eventually become an integral part of a wall, and thus of a structure, once concrete has consolidated, and serve as thermal and acoustic insulation means.

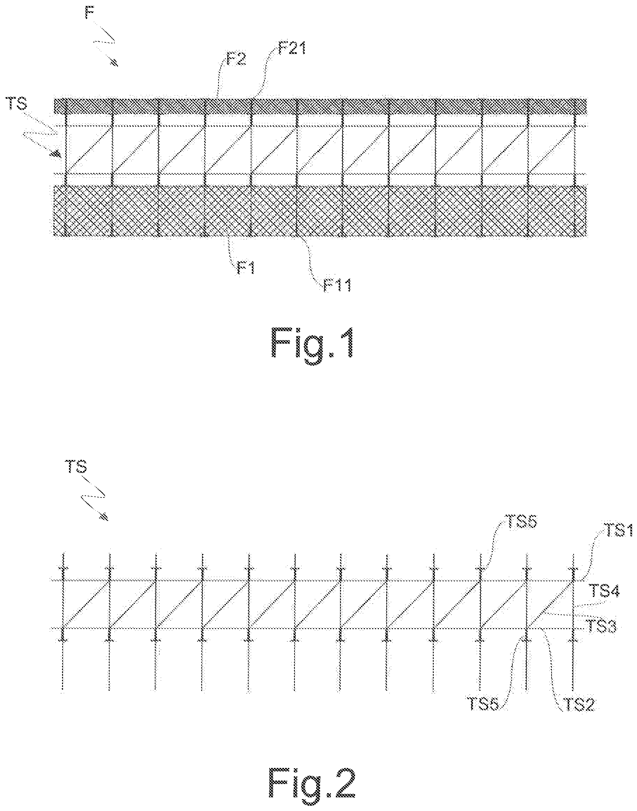

Figure 1 shows a longitudinal sectional view schematically of an exemplary formwork member F of this type sold by the Applicant under the trade name "Plastbau 3". The formwork member F comprises a first formwork panel F1, having a greater thickness, intended to face the outside of a structure, and a second formwork panel F2, having smaller thickness, spaced from the first panel F1 and intended to face the inside of a structure. Between the two panels F1, F2 a plurality of truss metal structures TS are arranged parallel to one another. Both panels F1, F2 have a plurality of through holes wherein the ends of transverse struts of the truss metal structures TS are fitted and fixed by way of suitable screw locking means, also referred to as "buttons". The buttons shown in figure 1 are respectively indicated as F11 and F21 and have for example a T shape in a longitudinal section. Each button comprises a sleeve configured to be fitted and locked on a transverse strut and a flange intended to mate a respective panel F1, F2.

Figure 2 shows an example of a truss metal structure TS of the prior art formwork member F of figure 1. As it may be seen, the truss metal structures TS are planar of flat structures comprising a pair of mutually parallel longerons TS1, TS2, every one of which is a metal rod having a diameter for example in the order of 10 mm, and a plurality of diagonal struts TS3 and transverse struts TS4 respectively in the form of metal rods having a diameter in the order of 4-5 mm. The connections between the longerons TS1, TS2, the diagonal struts TS3 and the transverse struts TS4 are typically made by welding.

While the diagonal struts TS3 extend between the longerons TS1, TS2, the transverse struts TS4 protrude beyond them thus forming appendices that are threaded so as to allow anchoring of the panels F1, F2 by way of buttons.

The truss metal structures further comprise the bearing members TS5 intended to receive and mate the panels F1, F2.

Composite building members of this type are relatively inexpensive, extremely light and easy to handle, and their installation may advantageously be carried out without resorting to dedicated machines, or even manually, by placing them along the periphery of a building under construction as well as along the paths of its interior walls. As mentioned above, once a concrete cast poured *in situ* has consolidated, the panels of the formwork members become an integral part of the building structure and serve as coating or insulating members both from the thermal and acoustic point of view.

Seats for laying electrical channels and hydraulic conduits, as well as for housing electric boxes and the like, are formed in the panels with heated blade tools. The internal and external surfaces of walls obtained with this type of formwork members may be finished with plaster, plasterboard and the like depending on specific design requirements.

The manufacturing processes of formwork members such as those shown in figure 1 can be improved because they require many lengthy manual assembly operations. In fact, if on the one hand the manufacturing of truss metal structures can be automated by resorting to manufacturing lines comprising metal rod decoilers, straightening devices and welding stations, and traditional molding and die cutting/drilling machines are employed for the manufacturing of the formwork panels, the assembly of formwork members is carried out by manually arranging the truss metal structures between the panels and fixing them thereon by screwing the buttons.

Moreover, builders increasingly ask for formwork members having non-standard heights depending on specific design requirements, which further penalizes the manufacturing processes and makes their automation difficult.

A further problem of the formwork members known in the field is that the assembly mode of truss metal structures onto the formwork panels results in thermal bridges being present in a finished structure. In fact, the transversal struts of the truss metal structures cross the assembly holes formed in the panels and are thus thermally conductive elements that reduce the heat-insulating effect the panels.

US 2015/0224687 A1 discloses an apparatus suitable for the manufacturing of a formwork member comprising a first formwork panel made of expanded polystyrene and a plurality of truss metal structures arranged parallel to one another. The apparatus comprises a feeding station configured to feed truss metal structures arranged in parallel along a manufacturing direction, as well as a molding station arranged after said feeding station and configured to receive therefrom the truss metal structures along the manufacturing direction and to make on a portion thereof a first panel of a formwork member.

The molding station comprises a molding chamber configured for the injection of polystyrene spheres or beads and their expansion by supplying steam, the spheres or beads being intended to form the first panel embedding a portion of the truss metal structures.

DE 102011107964 A1 discloses an apparatus suitable for the manufacturing of foamed polystyrene endless blocks. The apparatus comprises a molding station having a molding chamber configured for the injection of polystyrene spheres or beads and their expansion by supplying steam. The molding station also comprises a dimensional stabilization chamber contiguous to the molding chamber and configured to receive a foamed block formed therein.

A moving assembly is arranged directly after the molding station. The moving assembly is configured to grab a portion of the foamed block coming out from the dimensional stabilization chamber and to make it move in a manufacturing direction by a desired length.

The apparatus also comprises a separation chamber arranged between the molding chamber and the dimensional stabilization chamber so as to form between them a space providing thermal insulation.

The object of the present invention is to provide an apparatus and a process for the manufacturing of formwork members which allow to overcome the aforesaid drawbacks. More particularly, it is an object of the present invention to provide a fully automated manufacturing apparatus that allows to provide continuous formwork members incorporating groups of mutually parallel truss metal structures.

Said objects are attained with an apparatus and a process whose main features are specified in claims 1 and 9, respectively, while other features are specified in the remaining claims.

An idea of solution underlying the invention is to manufacture a formwork member wherein the first panel F1, which has a greater thickness and is intended to face the outside of a structure, is made directly on a portion of the truss metal structures and partially embeds them. The second panel F2 is instead mounted on the free portions of the truss metal structures in a traditional way. It is thus possible prevent the formation of thermal bridges between the outside and the inside of a structure. Moreover, this allows to achieve a higher level of automation of the manufacturing process and to reduce the assembly time, because it is possible to manufacture a semi-finished product comprising the first panel and the truss metal structures.

To this aim, the apparatus according to the invention comprises a feeding station configured to feed a plurality of truss metal structures in parallel and a molding station arranged consecutively to the feeding station and configured to receive the truss metal structures therefrom and to make a first panel of a formwork member on a portion thereof.

The molding station comprises a molding chamber configured for the injection of polystyrene spheres or beads and their expansion by supplying steam, these forming a first panel F1 of sintered expanded polystyrene (EPS) embedding a portion of the truss metal structures TS. The molding station also comprises a dimensional stabilization chamber contiguous to the molding chamber, which receives the first panel so formed and embedding the truss metal structures and allows their cooling and dimensional stabilization.

According to a preferred embodiment of the invention, the first panel F1 is formed of consecutive segments obtained by progressively making the truss metal structures advance from the molding chamber to the dimensional stabilization chamber. This allows to limit the size of the molding station in the manufacturing direction and therefore to reduce the fabrication cost of the apparatus according to the invention. The time the moving steps of the truss metal structures take are determined by the time required for the expansion and dimensional stabilization of polystyrene.

In order to move the truss metal structures, the feeding station of the apparatus according to the invention comprises a plurality of grippers movable to and from the molding station by way of a supporting structure.

The feeding station is also configured to receive groups of truss metal structures suitably spaced apart in the manufacturing direction. This solution advantageously allows to manufacture by discrete steps a continuous semi-finished product made of expanded polystyrene, wherein groups of truss metal structures are embedded. The semi-finished product so manufactured is cut into individual members at a cutting station employing heated wires, which is arranged along an unloading station that is in turn arranged downstream of the molding station with respect to the manufacturing direction. The individual members of the semi-finished product are completed in a finishing station of the apparatus, wherein a second panel F2 is applied on the truss metal structures in a known manner.

According to the invention, between the molding chamber and the dimensional stabilization chamber of the molding station an auxiliary molding chamber communicating with them is arranged, the auxiliary molding chamber being selectively heatable by supplying steam. The apparatus further comprises a moving assembly associated with the unloading station and arranged directly at an outlet of the molding station. The moving assembly is configured as a press grasping a portion of the first panel F1 coming out from the dimensional stabilization chamber and making it move in the manufacturing direction by a desired length, thus making partially or completely accessible the volume of the auxiliary molding chamber of the molding station. Thanks to this configuration, it is possible to vary the volume of the molding chamber, thus allowing to make first panels having different lengths, and hence to meet the requirements of builders that use formwork members of this type.

The step of adjusting the volume of the molding chamber by activating the auxiliary forming chamber is carried out when the dimensional stabilization chamber completely contains tail portions of a first group of truss metal structures already embedded in the first panel and head portions of a second group of truss metal structures intended to be embedded in the sintered expanded polystyrene is in the molding chamber.

In other words, the use of the auxiliary molding chamber allows to vary the length of the portion connecting two consecutive first members F1 of the semi-finished product manufactured by the molding station, this portion being free from truss metal structures. This allows to operate the cut between two consecutive first members F1 at different points depending on the specific requirements of a customer. It is thus possible to obtain products whose height accurately meets specific design needs a and to avoid machining scraps.

According to a further aspect of the invention, in order align the truss metal structures TS properly in the manufacturing direction, in particular in the feeding station, the apparatus comprises suitable guides arranged upstream of the molding station. The guides are respectively associated with longitudinal profiles comprising a plurality of retractable teeth projecting transversely therefrom and urged outwards by elastic means such as springs. The retractable teeth are equally spaced in the manufacturing direction according to a pitch corresponding to the a pitch of the transverse struts TS4 of the truss metal structures TS and are transversely aligned so that all the guides have sets of retractable teeth arranged at the same distances from the molding station.

The retractable teeth are configured so as to yield upon contact with the transverse struts TS4 of the truss metal structures TS being moved toward the molding station and enter respective seats formed in the longitudinal profiles. The retractable teeth are also configured so as to exit their seats, e.g. urged by respective springs, immediately after passage of the transverse struts TS4 and to direct towards them an abutment surface that prevents movement of the truss metal structures TS in the opposite direction.

Thanks to this configuration, it is possible to align in a precise and repeatable manner groups of truss metal structures TS in the manufacturing direction, thus ensuring a high precision in the manufacturing of the reinforcing structure of a formwork member F.

Another advantage provided by the invention is that the apparatus may be arranged in line with an automatic device for the manufacturing of truss metal structures, configured to make such structures starting from metal rods fed from respective coils. An automated warehouse configured to receive truss metal structures and to supply groups of them to the guides of the feeding station may be advantageously arranged between the automatic device and the apparatus.

Further advantages and features of the apparatus and process for the manufacturing of formwork members according to the present invention will become clear to those skilled in the art from the following detailed and non-limiting description of embodiments thereof with reference to the attached drawings, wherein:
- figures 1 and 2 respectively show a longitudinal sectional view of a prior art formwork member and a side view of a truss metal structure thereof;
- figures 3a and 3b respectively show a perspective view and a longitudinal sectional view of a formwork member according to the present invention;
- figures 4a and 4b respectively show a perspective view and a side view of a truss metal structure of the formwork member according to the present invention;
- figures 5 to 12 are side views of an apparatus according to the invention, which schematically show subsequent steps of the manufacturing of a formwork member such as the formwork member shown in figures 3a and 3b.

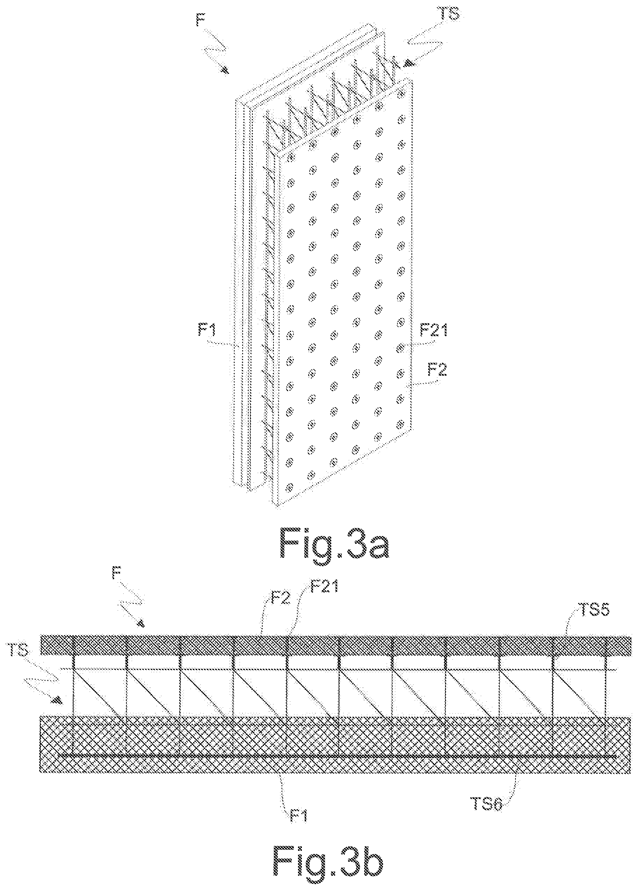

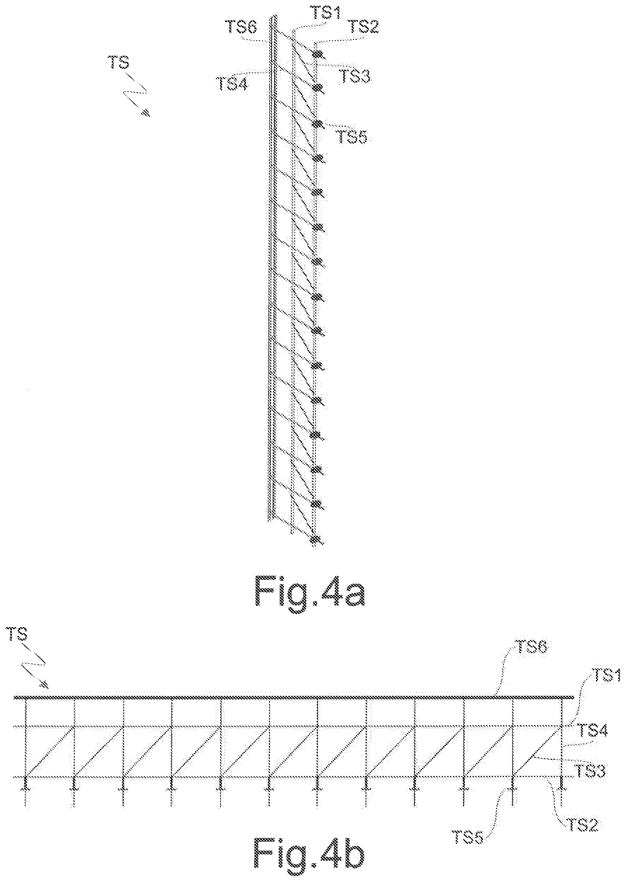

Referring to figures 3a, 3b and 4a, 4b, similarly to the Plastbau 3 formwork member known in the art, a formwork member according to the invention comprises a first formwork panel F1, having a greater thickness and intended to face the outside of a building structure, and a second formwork panel F2, having a smaller thickness, parallel and spaced apart from the first panel F1 and intended to face the inside of a building structure. A plurality of truss metal structures TS are arranged parallel to each other between the panels F1, F2. The truss metal structures TS are flat structures comprising a pair of longerons TS1, TS2 parallel to each other, every one of which is a metal rod having a diameter in the order of 10 mm, and a plurality of diagonal struts TS3 and transverse struts TS4 respectively in the form of metal rods, whose diameter is in the order of 4-5 mm. The connections between longerons TS1, TS2, diagonal struts TS3 and transverse struts TS4 are typically made by welding.

Unlike a Plastbau 3 formwork member, the first panel F1 of the formwork member F according to the invention incorporates a transverse portion of the truss metal structures TS and to this purpose these advantageously comprise a profiled bar TS6 on which the free ends of the transverse struts TS4 are fixed.

The second panel F2A comprises a plurality of through holes, wherein the ends of the transverse struts of the truss metal structures TS are fitted and fixed by way of suitable screw clamping means F21, e.g. buttons. Similarly to the prior art formwork member Plastbau 3, the second panel F2 rests on bearing members TS5 mounted on the transverse struts TS4.

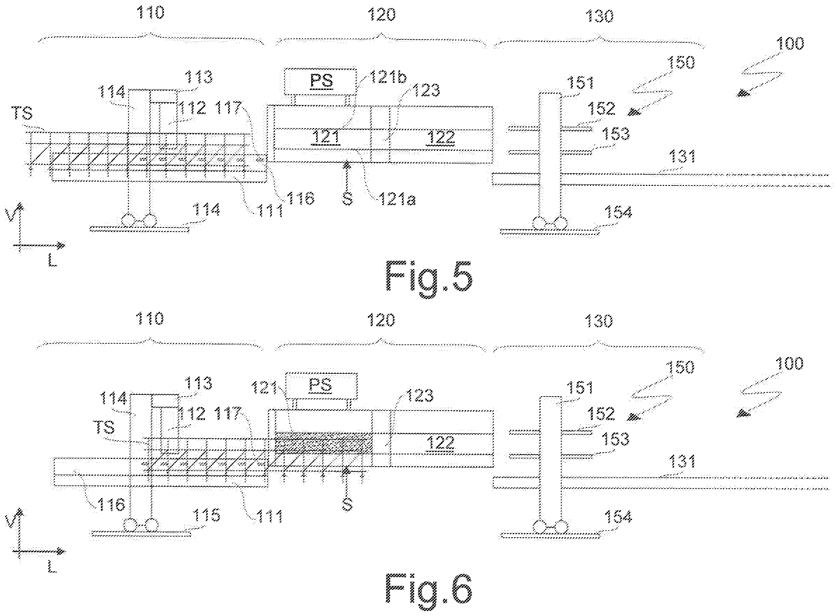

Now referring to figures 5 to 12, an apparatus for the manufacturing of the formwork member of figures 3a and 3b will be described, the formwork member comprising truss metal structures like that shown in figures 4a and 4b.

The apparatus according to the invention is generally indicated by reference numeral 100 and is shown in a reference system L, V. A longitudinal direction L represents the main extension direction of the apparatus, as well as the manufacturing direction along which a formwork member F like that shown in figure 1 is progressively formed. A vertical direction V, perpendicular to the longitudinal direction L, represents the direction along which the gravity force acts. The apparatus according to the invention also extends in a transverse direction (not shown in the figures), perpendicular to the longitudinal direction L and the vertical V.

With reference to the longitudinal or manufacturing direction L, the apparatus 100 comprises in series a plurality of machining stations every one of which is configured to carry out specific operations or steps of the manufacturing process of a formwork member F.

The apparatus 100 comprises in particular a feeding station 110 configured to receive and feed in parallel a plurality of truss metal structures TS, such as that shown in figure 4, intended to be partially embedded in a first panel F1 made of expanded polystyrene of a formwork member F such as that shown in figures 3a and 3b. After the feeding station 110 a molding or forming station 120 is arranged in the longitudinal direction L, the molding station being configured to receive portions of the truss metal structures TS from the feeding station 110 and to form thereon the first panel F1 made of expanded polystyrene.

After the molding station 120 an unloading station 130 configured to progressively receive portions of the truss metal structures TS embedded in the expanded polystyrene panel F1 is arranged.

The individual manufacturing stations of the apparatus 100 according to the invention will now be described more in detail, together with the corresponding manufacturing process steps they perform.

The feeding station 110 comprises a plurality of hollow guides 111 arranged parallel to one another in the longitudinal direction L and spaced apart in the transverse direction. Each guide 111 includes a vertical cavity configured to receive a truss metal structure TS. The truss metal structures TS are fitted in the respective guides 111 such that their bearing members TS5 mate the edges of the guides 111 and that the portions of the truss metal structures comprising the longerons TS1, TS2, the diagonal struts TS3 and the transverse struts TS4, as well as the profiled bar TS6 intended to be embedded in the first panel F1 made of expanded polystyrene, protrude in the vertical direction V. It will be appreciated that the truss metal structures TS are arranged vertically in the apparatus 100.

In order to move the truss metal structures TS toward the molding station 120, the feeding station 110 further comprises a plurality of grippers 112 arranged in correspondence with each guide 111 and spaced apart therefrom in the vertical direction V. The grippers 112 are held over the guides 111 by a crosspiece 113 supported by uprights 114 and movable in the longitudinal direction L along a pair of rails 115. The crosspiece 113 may be moved e.g. by way of a motor mounted thereon and connected through axles to toothed wheels engaging racks associated with the rails 115.

The movements of the crosspiece 113 in the longitudinal direction L and the closing and opening movements of the grippers 112 are controlled through a control system (not shown) of the apparatus 100.

During operation of the apparatus 100, when the truss metal structures TS are fitted in the respective guides 111, the grippers 112 are closed thus grasping them for example in correspondence of one of the longerons TS1, TS2, e.g. the upper longeron TS1 with respect to the vertical direction V. The crosspiece 113 is then operated, which allows to move the truss metal structures TS so restrained to the grippers 112 toward the molding station 120.

As shown in figure 5, in order to make the truss metal structures TS enter the molding station 120, the former are placed in the guides 111 so that a portion thereof protrudes from the grippers 112 in the longitudinal direction L. The length of this portion substantially corresponds to the portion of the truss metal structures TS intended to be embedded in the first panel F1 of the formwork member F.

Once the portions of the truss metal structures TS are brought into the molding station 120, the grippers 112 are opened and the crosspiece 113 is brought back to the starting position so as to allow to move subsequent portions of the truss metal structures TS.

In order to align the truss metal structures TS properly in the longitudinal direction L, the guides 111 are respectively associated with longitudinal profiles 116 comprising a plurality of retractable teeth 117 projecting transversely therefrom and urged outwards by resilient means (not shown) such as springs. The retractable teeth 117 are equally spaced in the longitudinal direction L according to a pitch corresponding to a pitch of the transverse struts TS4 of the truss metal structures TS, for example 200 mm, and are transversely aligned so that all the parallel guides 111 have sets of retractable teeth 117 respectively arranged at the same distances from the molding station 120.

The retractable teeth 117 are configured to yield upon contact with the transverse struts TS4 of the truss metal structures TS being moved towards the molding station 120, and enter respective seats formed in the longitudinal profiles 116. The retractable teeth are also configured so as to exit their seats, e.g. urged by respective springs, immediately after passage of the transverse struts TS4 and to direct towards them an abutment surface that prevents movement of the truss metal structures TS in the opposite direction.

Thanks to this configuration, it is possible to align in a precise and repeatable manner groups of truss metal structures TS in the longitudinal direction L, thus ensuring a high precision in the manufacturing of the reinforcing structure of a formwork member F.

According to an embodiment of the invention, the retractable teeth 117 may for example be formed as slats pivoted at one end in the respective seats (not shown) of the longitudinal profiles 116 and urged into a position spaced apart from the seats by respective springs. The overall configuration is such that in the longitudinal direction L the retractable teeth 117 feature an inclined surface that widens outwards when proceeding toward the molding station 120, and a surface substantially perpendicular to the respective longitudinal profiles when proceeding in the opposite direction relative to the molding station 120.

The provision of the retractable teeth 117 also allows to precisely know the length of the portions of the truss metal structures TS progressively brought in parallel into the molding station 120, whereby the manufacturing process may be automated. To this aim, the feeding station 110 may include proximity sensors (not shown) configured to detect the passage of the transverse struts TS4 of the truss metal structures TS. The position of these sensors in the longitudinal direction defines a threshold at which the control system of the apparatus 100 calculates the movements of the truss metal structures TS.

According to a preferred embodiment of the invention, the proximity sensors are mounted in the vicinity of the grippers 112 and are movable with them and the crosspiece 113, thus advantageously allowing to calculate the length of the portions of the truss metal structures TS projecting beyond the grippers 112.

The molding station 120 comprises a molding chamber 121 configured for the injection of polystyrene spheres or beads on the truss metal structures TS so as to embed a portion thereof in the first panel F1 of a formwork member F. The molding chamber 121 is supplied with steam which, as it is known, allows expansion of the polystyrene spheres or beads as well as their welding or sintering. The spheres or beads of polystyrene may for example be fed from a storage silo (not shown) to a tank or container arranged above the molding station 120. The tank is schematically indicted in the figures as PS, while steam supply lines are schematically indicated by an arrow S.

As explained in the background, only a portion of the truss metal structures TS is embedded in the first panel F1 of the formwork member F. To this aim, a bottom wall 121a of the forming chamber 121 includes a plurality of through openings (not shown) formed as grooves in the longitudinal direction L and aligned with the guides 111 in the manufacturing direction L, and the guides 111 of the feeding station 110 are arranged at a lower height than the bottom wall 121a in the vertical direction V. Hence only a part of the truss metal structures TS enters the forming chamber 121.

The thickness of the first panel F1 may be adjusted by way of an upper wall 121b of the molding chamber 121 that is movable in the vertical direction V.

The molding station 120 also comprises a dimensional stabilization chamber 122 contiguous to the molding chamber 121 and having its same size. Unlike the molding chamber 121, the dimensional stabilization chamber 122 has no steam supplying lines.

In order to make a first portion of the first panel F1, at the beginning of the manufacturing process according to the invention a plug made of expanded polystyrene is arranged in the dimensional stabilization chamber 122, the plug having a size substantially corresponding to the size of this chamber. The distance between the free ends of the truss metal structures TS and an inlet of the dimensional stabilization chamber 122 determines the longitudinal dimension, or length, of a connecting portion of the first panel F1.

At the end of the step of injection and expansion of polystyrene spheres or beads onto the portions of the truss metal structures TS introduced into the molding chamber 121, the portions of the truss metal structures TS are moved forward again by operating the grippers 112 and the crosspiece 113 of the feeding station 110, thus bringing new portions of the truss metal structures TS into the molding chamber 121. Consequently, the portions of the truss metal structures TS previously embedded in the expanded polystyrene are moved into the dimensional stabilization chamber 122 together with the portion of the first panel F1 so manufactured. These portions remain in the dimensional stabilization chamber 122 for the whole duration of a subsequent step of injection and expansion of polystyrene spheres or beads, and are cooled and stabilized from a dimensional point of view due to the contact with the walls, not heated, of the dimensional stabilization chamber 122.

The expanded polystyrene plug arranged in the dimensional stabilization chamber 122 is ejected from the molding station 120 and, during the subsequent forming steps, the expanded polystyrene portions that are progressively brought into the dimensional stabilization chamber 122 act as a plug closing the molding chamber 121.

As explained above, it will be appreciated that the unloading station 130 arranged after the molding station 120 progressively receives portions of the first panel F1 partially embedding the truss metal structures TS. To this aim, the unloading station 130 comprises a table 131 with rollers that are preferably motorized.

The manufacturing process according to the invention is a continuous process, and to this aim one or more further groups of truss metal structures TS are fitted in the guides 111 of the feeding station 110, the groups being suitably spaced apart from those preceding them in the longitudinal direction L so as to allow to form the connecting portions of the first panel F1. It follows that the manufacturing apparatus according to the invention advantageously allows to manufacture a continuous member made of expanded polystyrene by discrete steps based on the time needed for the injection and expansion of polystyrene. The continuous member made of expanded polystyrene consists of a series of first panels F1 contiguous to each other wherein groups of mutually parallel truss metal structures TS are embedded, the groups of truss metal structures TS being spaced apart from one another in the manufacturing direction L.

In order to allow separation between the individual members, the apparatus 100 according to the invention also comprises a cutting station 140 located along the table of the unloading station 130 and configured to cut, e.g. by means of heated wires, the first panel F1 made of expanded polystyrene in correspondence of its connecting portions, namely the longitudinal portions of the continuous member made of expanded polystyrene that are free from truss metal structures TS.

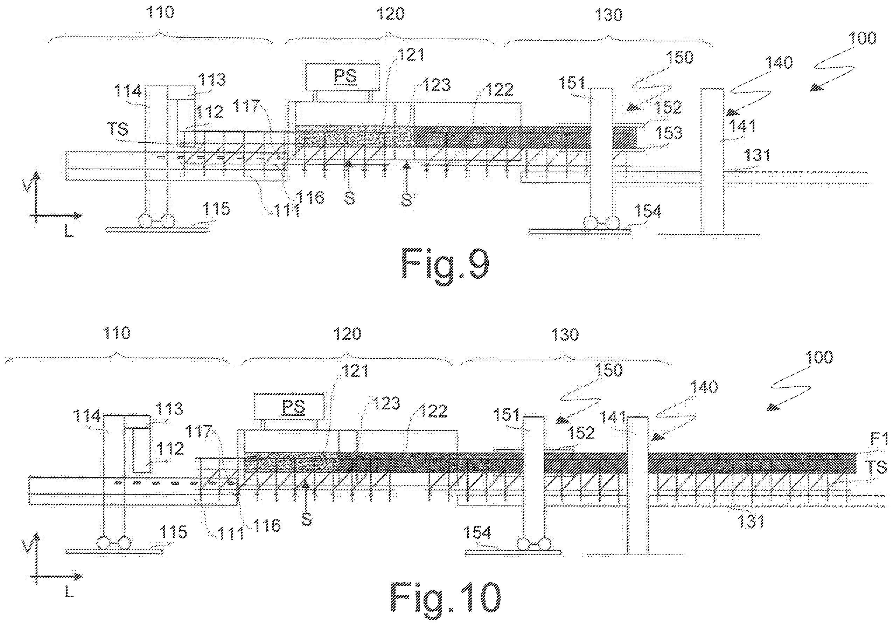

With reference to figures 9 to 11, in the illustrated embodiment the cutting station 140 comprises a pair of uprights 141 extending vertically aside the roller table 131, between which a wire made of an electrically conductive material (not shown) is stretched transversely. The uprights 141 support the electrically conductive wire in a movable manner in the vertical direction V, thus allowing to cut the first panel F1 at the portions free from the truss metal structures TS.

The cutting station 140 is operated and controlled by the control system of the apparatus 100.

According to the present invention, between the molding chamber 121 and the dimensional stabilization chamber 122 of the molding station 120 an auxiliary molding chamber 123 is arranged. The auxiliary molding chamber 123 communicates with the molding chamber 121 and the dimensional stabilization chamber 122 and is configured so as to be selectively heated by supplying steam through lines S' that are independent from the lines S supplying steam to the molding chamber 121. The apparatus 100 further comprises a moving assembly 150 associated with the unloading station 130 and arranged directly at the outlet of the molding station 120, i.e. between the latter and the cutting station 140. The moving assembly 150 is configured as a press for grasping a portion of the first panel F1 coming out from the dimensional stabilization chamber 122 and make it move forward it in the manufacturing direction L by a desired length, thus making the volume of the auxiliary molding chamber 123 of the molding station 120 partially or completely accessible.

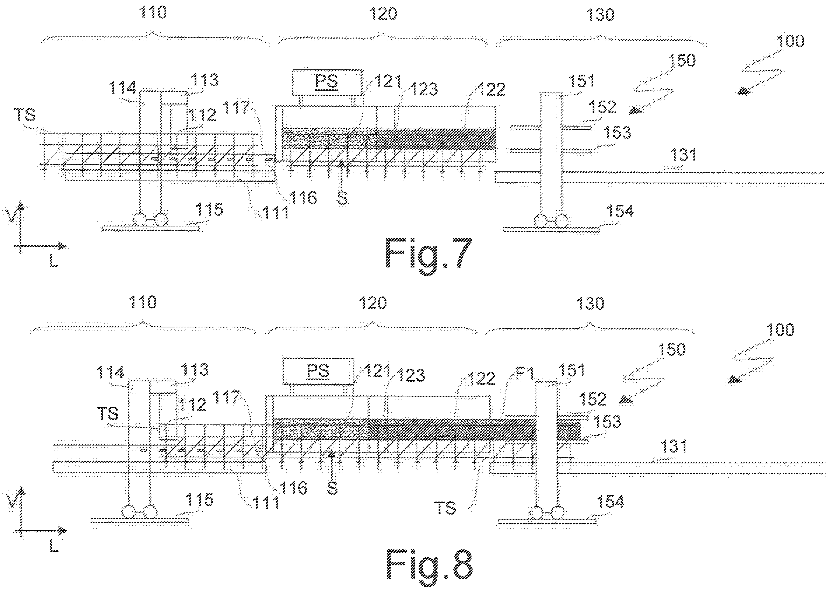

The step of adjusting the volume of the molding chamber 121 by activation of the auxiliary molding chamber 123 is carried out when, as shown in figures 8 and 9, the dimensional stabilization chamber 122 completely contains tail portions of the truss metal structures TS of a first group already embedded in the first panel F1, as well as a tail portion of the latter that is free from truss metal structures, and the molding chamber 121 contains head portions of the truss metal structures TS of a second group intended to be embedded in expanded polystyrene.

In other words, the selective use of the auxiliary molding chamber 123 allows to vary the length of the connecting portion between two contiguous first panels F1 of the semi-finished product manufactured by the molding station 120, which is free from metal reinforcements. This allows to operate the cut between contiguous first panels F1 at different points depending on the specific requirements of a customer. The resulting formwork member F will thus have a height corresponding to that required by a specific project while avoiding machining scraps.

It will be understood that the auxiliary molding chamber 123 is not used during the manufacturing of the portions of the first panel F1 that embed portions of the truss metal structures TS.

In the illustrated embodiment, the moving assembly 150 comprises a pair of uprights 151 arranged aside the table 131 of the unloading station 130, between which a plane 152 is arranged, the plane being movably restrained to the uprights 151 in the vertical direction V. The moving assembly 150 further comprises a pair of bearing surfaces 153 respectively restrained to the uprights 151, which, as shown in figure 6, support the edges of the first panel F1 coming out from the dimensional stabilization chamber 122.

The uprights 151 are movable in the longitudinal direction L along respective rails 154 and are restrained to respective e.g. hydraulic linear actuators (not shown). The overall configuration of the moving assembly 150 is substantially that of a press that can grab the first panel F1 and drag it in the longitudinal direction L by a desired length.

In the light of the above and as shown in figures 5 to 11, it will be appreciated that, referring to the vertical direction V, the continuous semi-finished product manufactured by the molding station 120 and separated into individual pieces by the cutting station 140 is arranged such that the first panel F1 is above the truss metal structures TS.

In order to finish a formwork member F, it is known to assemble a second panel F2 on the truss metal structures TS. The second panel F2 is manufactured according to known polystyrene sintering techniques and comprises a plurality of through holes configured to be receive the free ends of the transverse struts TS4 of the truss metal structures TS. The through holes are formed therein e.g. by die-cutting. The second panel F2 is placed onto the transverse struts TS4 so as to mate the bearing members TS5. In order to allow assembly of the second panel F2, the free ends of the transverse struts TS4 are suitably threaded and locking members F21 comprising a threaded sleeve and a flange, the so-called "buttons", are screwed on the free ends of the transverse struts TS4 and mate the face of the second panel F2 opposite to the first panel F1. The second panel F2 is thus restrained to the semi-finished product, in particular clamped between the threaded members F21 and the supporting members of TS6.

In order to allow assembly of a second panel F2 in line, and hence automation of the manufacturing process, the apparatus 100 comprises an overturning station 160 arranged after of the cutting station 140 along the manufacturing direction L. The overturning station 160 is configured to overturn a semi-finished product separated by cutting from the continuous product coming out from the molding station 120 about an axis parallel to the manufacturing direction L. After the overturning step, the truss metal structures TS of the semi-finished product embedded in the first panel F1 face upwards in the vertical direction V and are therefore accessible for the assembly of a second panel F2 of the formwork member F.

The steps of fitting and screwing the threaded members F21 may be advantageously performed automatically and controlled by the control system of the apparatus 100.

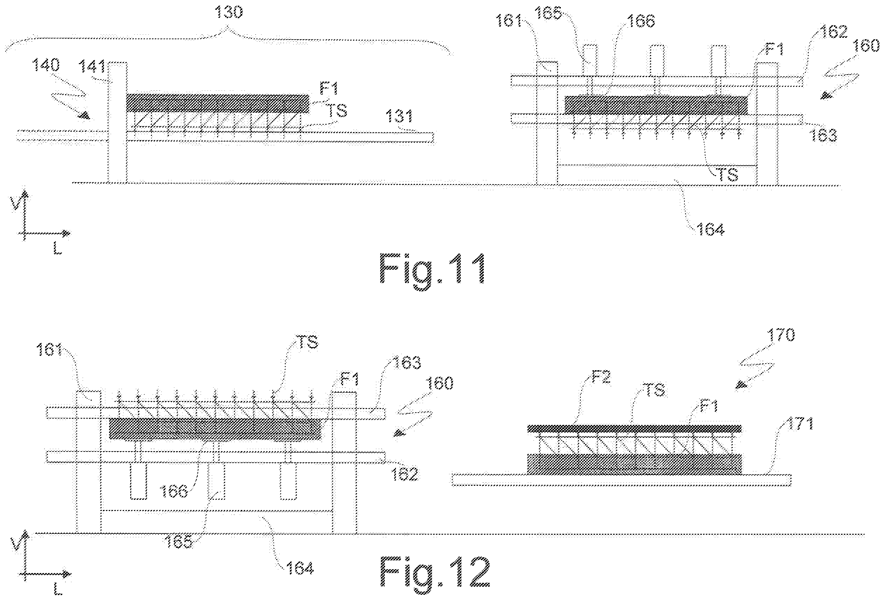

With reference to figures 11 and 12, in the illustrated embodiment the overturning station 160 comprises for example an assembly consisting of a pair of annular members 161 arranged transversely to the longitudinal direction L and having such a diameter to receive a semi-finished product coming from the unloading station 130. A supporting surface 162 and a pair of parallel guides 163 are restrained to the annular members 161, the supporting surface and the guides extending in the longitudinal direction L and being spaced apart vertically. The distance between the guides 163 and the supporting surface 162 is greater than the thickness of the first panel F1.

The assembly formed by the annular members 161, the supporting surface 162 and the guides 163 is supported by a base 164 of the overturning station 160, wherein motorized rollers (not shown) rotatably supporting the annular members 161 are mounted so as to allow rotation of the assembly.

The overturning station 160 receives a semi-finished product into the annular members 161 with the guides 163 arranged below the support surface 162 with respect to the vertical direction V. In this way the panel F1 of the semi-finished product is supported by the guides 163 along its longitudinal edges. Starting from this configuration, the assembly formed by the annular members 161, the supporting surface 162 and the guides 163 is rotated about the axis of the annular members 161 so that the panel F1 comes into contact with the supporting surface 162. In order to facilitate rotation of the semi-finished product and to prevent undesired transverse movements thereof during this step, jacks 165, for example of a hydraulic type, provided with plates 166 that are pressed onto the first panel F1 so as to urge it against the guides 163 may be advantageously associated with the supporting surface 162. After the overturning step, the jacks 165 and the plates 166 are retracted, thus bringing the semi-finished product onto the supporting surface 162.

In order to facilitate withdrawal of the semi-finished product from the overturning station 160 the supporting surface 162 may be advantageously provided with rollers (not shown), preferably motorized, arranged transversely to the longitudinal direction L.

After the overturning station 160 a finishing station 170 is arranged. The finishing station comprises a table 171, preferably provided with rollers (not shown) arranged transversely to the longitudinal direction L, where the second panel F2 is assembled as described above.

The present invention has hereto been disclosed with reference to preferred embodiments thereof. It will be appreciated that there may be other embodiments relating to the same inventive idea, as defined by the scope of protection of the claims set out below.

## Claims

1. An apparatus (100) for the manufacturing of a formwork member (F) comprising a first formwork panel (F1) made of expanded polystyrene, by a plurality of truss metal structures (TS) arranged parallel to one another, said apparatus (100) comprising a feeding station (110) configured to feed along a manufacturing direction (L) a plurality of truss metal structures (TS) arranged in parallel and a molding station (120) arranged after said feeding station (110) and configured to receive therefrom said truss metal structures (TS) along said manufacturing direction (L) and to make on a portion thereof a first panel (F1) of a formwork member (F),
wherein said molding station (120) comprises a molding chamber (121) configured for the injection of polystyrene spheres or beads and their expansion by supplying steam, said spheres or beads being intended to form said first panel (F1) embedding a portion of the truss metal structures (TS), and wherein said molding station (120) also comprises a dimensional stabilization chamber (122) contiguous to said molding chamber (121) and configured to receive the first panel (F1) formed therein,
the apparatus (100) further comprising a moving assembly (150) arranged directly after the molding station (120), said moving assembly (150) being configured to grab a portion of the first panel (F1) coming out from the dimensional stabilization chamber (122) and make it move in the manufacturing direction (L) by a desired length,
**characterized in that** the formwork member (F) further comprising a second formwork panel (F2) made of expanded polystyrene, said first and second formwork panels being restrained and spaced apart from each other by the plurality of truss metal structures (TS), and
an auxiliary molding chamber (123) is arranged between the molding chamber (121) and the dimensional stabilization chamber (122), said auxiliary molding chamber (123) communicating with the molding chamber (121) and the dimensional stabilization chamber (122),
and **in that** the auxiliary molding chamber (123) is configured to be selectively heated by supplying steam.

2. An apparatus (100) according to the claim 1, wherein the moving assembly (150) comprises a pair of uprights (151) between which a plane (152) is arranged, the plane (152) being movably restrained to the uprights (151) in a vertical direction (V) perpendicular to the manufacturing direction (L), the moving assembly (150) further comprising a pair of bearing surfaces (153) that are respectively associated with said uprights (151) and configured to support the edges of the first panel (F1) coming out from the dimensional stabilization chamber (122), said uprights (151) being movable in the manufacturing direction (L) along respective rails (154).

3. An apparatus (100) according to claim 1 or 2, wherein said feeding station (110) comprises a plurality of guides (111) arranged parallel to one another in the manufacturing direction (L) and spaced apart transversely, each guide (111) comprising a cavity configured to receive a truss metal structure (TS).

4. An apparatus (100) according to claim 3, wherein the feeding station (110) further comprises a plurality of grippers (112) arranged at each guide (111) and spaced apart therefrom in a vertical direction (V) perpendicular to the manufacturing direction (L), said grippers (112) being supported over the guides (111) by a crosspiece (113) supported by uprights (114) that are movable in the manufacturing direction (L) along a pair of rails (115).

5. An apparatus (100) according to claim 3 or 4, wherein the guides (111) are respectively associated with longitudinal profiles (116) comprising a plurality of retractable teeth (117) transversely protruding therefrom and urged outwards by elastic means, said retractable teeth (117) being equally spaced apart in the manufacturing direction (L) and being transversely aligned so that all the guides (111) have sets of retractable teeth (117) arranged at the same distances from the molding station (120), wherein the retractable teeth (117) are configured so as to yield upon contact with transverse struts (TS4) of the truss metal structures (TS) being moved towards the molding station (120) and enter respective seats formed in the longitudinal profiles (116), and wherein the retractable teeth (117) are also configured so as to exit their seats immediately after passage of said transverse struts (TS4) and to direct towards them an abutment surface that prevents the truss metal structures from moving in the opposite direction.

6. An apparatus (100) according to anyone of claims 1 to 5, further comprising a unloading station (130) arranged after the molding station (120) in the manufacturing direction (L) and a cutting station (140) arranged along said unloading station (130) downstream of the moving assembly (150), said cutting station (140) being configured to cut the first panel (F1) coming out from the dimensional stabilization chamber (122) at a portion thereof free from truss metal structures (TS).

7. An apparatus (100) according to claim 6, further comprising an overturning station (160) arranged downstream of the cutting station (140) in the manufacturing direction (L), said overturning station (160) being configured to overturn a first panel (F1) separated by the cutting station (140) together with the truss metal structures (TS) embedded therein about an axis parallel to the manufacturing direction (L).

8. An apparatus (100) according to claim 7, further comprising a finishing station (170) configured for placing and assembling a second panel (F2) onto the truss metal structures (TS).

9. A process for the manufacturing of a formwork member (F) comprising a first formwork panel (F1) and a second formwork panel (F2) made of expanded polystyrene, said panels being restrained and spaced apart from each other by a plurality of truss metal structures (TS) arranged parallel to one another in a manufacturing direction (L), said process comprising the steps of:
i) Providing a manufacturing apparatus (100) according to any one of claims 1 to 8;
ii) Feeding a first group of truss metal structures (TS) arranged parallel to one another into a molding chamber (121) of a molding station (120) of said apparatus (100);
iii) Injecting spheres or beads of polystyrene into said molding chamber (121);
iv) Supplying steam to the molding chamber (121) in order to cause the polystyrene spheres or beads to expand and be sintered and to make a longitudinal portion of a first panel (F1) on portions of the truss metal structures (TS);
v) Moving said truss metal structures (TS) in the manufacturing direction (L) and bringing the portions embedded in the longitudinal portion of the first panel (F1) into a dimensional stabilization chamber (122) of the molding station (120);
vi) Repeating steps iii) to v) until the truss metal structures (TS) are fully embedded in the first panel (Fl);
vii) Feeding a second group of truss metal structures (TS) arranged parallel to one another into the molding chamber (121) of a molding station (120), said second group of truss metal structures (TS) being spaced apart from the first group in the manufacturing direction (L);
viii) Adjusting the distance in the manufacturing direction (L) between a tail end of the first panel (F1) and the molding chamber (121) so as to make partially or completely available the volume of an auxiliary molding chamber (123) arranged between the molding chamber (121) and the dimensional stabilization chamber (122) for the injection of polystyrene spheres or beads, said adjusting step being carried out when the dimensional stabilization chamber (122) completely contains tail portions of the truss metal structures (TS) of the first group embedded in the first panel (F1) and the molding chamber (121) contains head portions of the truss metal structures (TS) of the second group;
ix) Injecting polystyrene spheres or beads into the molding chamber (121) and the auxiliary molding chamber (123);
x) Supplying steam to the molding chamber (121) and the auxiliary molding chamber (123);
xi) Forming a portion of the first panel (F1) free from truss metal structures (TS) at the auxiliary molding chamber (123);
xii) Repeating steps iii) to xi) thus obtaining a continuous member made of expanded polystyrene consisting of a series of first panels (F1) and truss metal structures (TS) arranged parallel to one another;
xiii) Separating said continuous member into individual first panels (F1) by cutting it in correspondence of connecting portions between subsequent first panels (F1) that are free from truss metal structures (TS);
xiv) Manufacturing a second polystyrene panel (F2) comprising a plurality of through holes configured to be receive free ends of transverse struts (TS4) of the truss metal structures (TS);
xv) Assembling said second polystyrene panel (F2) on the truss metal structures (TS) of each individual first panel (F1).

10. A process according to claim 9, wherein adjustment of the relative position between the tail portion of the first panel (F1) and the molding chamber (121) is carried out by way of a moving assembly (150) of the apparatus (100), said moving assembly being arranged directly at the outlet of the molding station (120).

## Patentansprüche

1. Eine Vorrichtung (100) zur Herstellung eines Schalungselements (F), umfassend ein erstes Schalungspaneel (F1) aus expandiertem Polystyrol und eine Vielzahl von parallel zueinander angeordneten Fachwerk-Metallstrukturen (TS), wobei die besagte Vorrichtung (100) eine Zuführstation (110) umfasst, die dazu ausgelegt ist, eine Vielzahl von parallel angeordneten Fachwerk-Metallstrukturen (TS) entlang einer Produktionsrichtung (L) zuzuführen, sowie eine nach der Zuführstation (110) angeordnete Formstation (120), welche dazu ausgelegt ist, von dort die besagten Fachwerk-Metallstrukturen (TS) entlang der genannten Produktionsrichtung (L) zu empfangen und auf einem Teil davon eine erste Schalungsplatte (F1) eines Schalungselements (F) anzufertigen,
- wobei die besagte Formstation (120) eine Formkammer (121) umfasst, die zum Injizieren von Polystyrol-Kugeln oder -Perlen und deren Expansion durch Zufuhr von Dampf ausgelegt ist, wobei die besagten Kugeln oder Perlen dazu vorgesehen sind, das besagte erste Schalungspaneel (F1) zu bilden, worin ein Teil der Fachwerk-Metallstrukturen (TS) eingebettet wird, und wobei die besagte Formstation (120) ferner eine an die besagte Formkammer (121) angrenzende Formstabilisierungskammer (122) aufweist und dazu ausgelegt ist, das erste, darin geformte Paneel (F1) aufzunehmen,
- wobei die Vorrichtung (100) ferner einen direkt nach der Formstation (120) angeordneten, beweglichen Aufbau (150) umfasst, der dazu ausgelegt ist, einen Teil der aus der Formstabilisierungskammer (122) herauskommenden ersten Schalungsplatte (F1) zu greifen und in der Produktionsrichtung (L) um eine gewünschte Länge zu bewegen,
- **dadurch gekennzeichnet, dass** das Schalungselement (F) ferner eine zweite Schalungsplatte (F2) aus expandiertem Polystyrol aufweist, wobei die besagten, ersten und zweiten Schalungsplatten gehalten und voneinander beabstandet werden durch die Mehrzahl von Fachwerk-Metallstrukturen (TS), und
- eine Hilfs-Formkammer (123) zwischen der Formkammer (121) und der Formstabilisierungskammer (122) angeordnet ist, wobei die besagte Hilfs-Formkammer (123) mit der Formkammer (121) und der Formstabilisierungskammer (122) in Verbindung steht,
- und dadurch, dass die Hilfs-Formkammer (123) dazu ausgelegt ist, selektiv durch Zufuhr von Dampf erhitzt zu werden.

2. Eine Vorrichtung (100) gemäß Anspruch 1, wobei der bewegliche Aufbau (150) ein Paar von Pfosten (151) aufweist, zwischen denen eine Fläche (152) angeordnet ist, wobei die Fläche (152) in einer vertikalen Richtung (V) rechtwinklig zu der Produktionsrichtung (L) beweglich an den Pfosten (151) gehalten ist, wobei der bewegliche Aufbau (150) ferner ein Paar von Auflageflächen (153) aufweist, welche den Pfosten (151) jeweils zugeordnet und dazu ausgelegt sind, die Kanten des ersten Schalungspaneels (F1), das aus der Formstabilisierungskammer (122) herauskommt, zu stützen, wobei die besagten Pfosten (151) in der Produktionsrichtung (L) entlang der zugeordneten Schienen (154) bewegbar sind.

3. Eine Vorrichtung (100) gemäß Anspruch 1 oder 2, wobei die besagte Zuführstation (110) eine Mehrzahl von Führungen (111) aufweist, die parallel zueinander in der Produktionsrichtung (L) angeordnet und quer dazu räumlich voneinander entfernt sind, wobei jede Führung (111) eine Vertiefung aufweist, die dazu ausgelegt ist, eine Fachwerk-Metallstruktur (TS) aufzunehmen.

4. Eine Vorrichtung (100) gemäß Anspruch 3, wobei die Zuführstation (110) ferner eine Mehrzahl von Greifern (112) aufweist, die an jeder Führung (111) angeordnet und davon in einer vertikalen Richtung (V) rechtwinklig zu der Produktionsrichtung (L) beabstandet sind, wobei die besagten Greifer (112) oberhalb der Führungen (111) durch eine Quertraverse (113) gestützt werden, die von in der Produktionsrichtung (L) entlang eines Schienenpaares (115) bewegbaren Pfosten (114) getragen wird.

5. Eine Vorrichtung (100) gemäß Anspruch 3 oder 4, wobei den Führungen (111) jeweils Längsprofile (116) zugeordnet sind, die eine Mehrzahl von zurückziehbaren Zähnen (117) umfassen, die quer aus ihnen herausragen und durch ein elastisches Mittel nach außen gedrängt werden, wobei die besagten zurückziehbaren Zähne (117) entlang der Produktionsrichtung (L) gleichmäßig voneinander beabstandet sind und quer dazu miteinander fluchten, so dass alle Führungen (111) Sätze von zurückziehbaren Zähnen umfassen, die in gleichen Abständen zu der Formstation (120) angeordnet sind, wobei die zurückziehbaren Zähne (117) derart gestaltet sind, um beim Kontakt mit Traversen (TS4) der Fachwerk-Metallstrukturen (TS), die in Richtung der Formstation (120) bewegt werden, zurückzuweichen und in zugeordnete Sitze einzutreten, die in den Längsprofilen (116) ausgebildet sind, und wobei die zurückziehbaren Zähne (117) auch dazu ausgelegt sind, ihre Sitze nach dem Durchgang der besagten Traversen (TS4) unverzüglich zu verlassen und eine Anlagefläche ihnen entgegen zu richten, welche die Fachwerk-Metallstrukturen daran hindert, sich in der entgegengesetzten Richtung zu bewegen.

6. Eine Vorrichtung (100) gemäß einem der Ansprüche 1 bis 5, ferner umfassend eine Entladestation (130), die entlang der Produktionsrichtung (L) nach der Formstation (120) angeordnet ist, sowie eine Schneidestation (140), die dem beweglichen Aufbau (150) entlang der besagten Entladestation (130) nachfolgend angeordnet ist, wobei die besagte Schneidestation (140) dazu ausgelegt ist, um das aus der Formstabilisierungskammer (122) herauskommende, erste Schalungspaneel (F1) in einem Bereich zu schneiden, der frei von Fachwerk-Metallstrukturen (TS) ist.

7. Eine Vorrichtung (100) gemäß Anspruch 6, ferner umfassend eine Umkantstation (160), die der Schneidestation (140) entlang der Produktionsrichtung (L) nachfolgend angeordnet ist, wobei die Umkantstation (160) dazu ausgelegt ist, ein erstes Schalungspaneel (F1), das von der Schneidestation (140) getrennt wurde, zusammen mit den darin eingebetteten Fachwerk-Metallstrukturen (TS) um eine zu der Produktionsrichtung (L) parallele Achse umzukanten.

8. Eine Vorrichtung (100) gemäß Anspruch 7, ferner umfassend eine Endbearbeitungsstation (170), die dazu ausgelegt ist, ein zweites Paneel (F2) auf den Fachwerk-Metallstrukturen (TS) zu platzieren und zu montieren.

9. Ein Verfahren zur Herstellung eines Schalungselements (F), umfassend ein erstes Schalungspaneel (F1) und ein zweites Schalungspaneel (F2) aus expandiertem Polystyrol, wobei die besagten Paneele gehalten und voneinander beabstandet werden durch eine Mehrzahl von Fachwerk-Metallstrukturen (TS), die parallel zueinander entlang der Produktionsrichtung (L) angeordnet sind, wobei das besagte Verfahren die folgenden Schritte umfasst:
i) Bereitstellen einer Fertigungsvorrichtung (100) gemäß einem der Ansprüche 1 bis 8;
ii) Zuführen einer ersten Gruppe von parallel zueinander angeordneten Fachwerk-Metallstrukturen (TS) in eine Formkammer (121) einer Formstation (120) der besagten Vorrichtung (100);
iii) Injizieren von Kugeln oder Perlen aus Polystyrol in die besagte Formkammer (121);
iv) Versorgen der Formkammer (121) mit Dampf, um eine Expansion und ein Sintern der Polystyrol-Kugeln oder -Perlen zu verursachen, und um einen länglichen Bereich eines ersten Paneels (F1) auf Teilen der Fachwerk-Metallstrukturen (TS) herzustellen;
v) Bewegen der besagten Fachwerk-Metallstrukturen (TS) in der Produktionsrichtung (L) und Einbringen der in dem länglichen Bereich des ersten Schalungspaneels (F1) eingebetteten Teile in eine Formstabilisierungskammer (122) der Formstation (120);
vi) Wiederholen der Schritte iii) bis v), bis die Fachwerk-Metallstrukturen (TS) vollständig in dem ersten Paneel (F1) eingebettet sind;
vii) Zuführen einer zweiten Gruppe von parallel zueinander ausgerichteten Fachwerk-Metallstrukturen (TS) in die Formkammer (121) der Formstation (120), wobei die besagte zweite Gruppe von Fachwerk-Metallstrukturen (TS) von der ersten Gruppe in der Produktionsrichtung (L) beabstandet ist;
viii) Einstellen des Abstands in Produktionsrichtung (L) zwischen einem hinteren Ende des ersten Paneels (F1) und der Formkammer (121), um so das Volumen einer Hilfs-Formkammer (123) zwischen der Formkammer (121) und der Formstabilisierungskammer (122) für die Injektion von Polystyrol-Kugeln oder -Perlen teilweise oder vollständig zugänglich zu machen, wobei der besagte Einstellschritt ausgeführt wird, wenn die Formstabilisierungskammer (122) die hinteren Enden der Fachwerk-Metallstrukturen (TS) der ersten Gruppe, eingebettet in dem ersten Paneel (F1), vollständig enthält, und die Formkammer (121) die vorderen Teile der Fachwerk-Metallstrukturen (TS) der zweiten Gruppe enthält;
ix) Injizieren von Polystyrol-Kugeln oder -Perlen in die Formkammer (121) und in die Hilfs-Formkammer (123);
x) Zuführen von Dampf in die Formkammer (121) und in die Hilfs-Formkammer (123);
xi) Formen eines Bereichs des ersten Paneels (F1), frei von den Fachwerk-Metallstrukturen (TS), in der Hilfs-Formkammer (123);
xii) Wiederholen der Schritte iii) bis xi), um auf diese Weise ein kontinuierliches Element aus expandiertem Polystyrol zu erhalten, bestehend aus einer Reihe von ersten Paneelen (F1) und Fachwerk-Metallstrukturen (TS), die parallel zueinander angeordnet sind;
xiii) Aufteilen des besagten kontinuierlichen Elements in einzelne erste Paneele (F1) durch Zerschneiden von Verbindungsbereichen zwischen aufeinander folgenden ersten Paneelen (F1), die frei von den Fachwerk-Metallstrukturen (TS) sind;
xiv) Herstellen eines zweiten Polystyrol-Paneels (F2), das eine Mehrzahl von Durchgangslöchern aufweist, die dazu ausgelegt sind, um die freien Enden der Traversen (TS4) der Fachwerk-Metallstrukturen (TS) zu empfangen;
xv) Montieren des besagten, zweiten Polystyrol-Paneels (F2) an den Fachwerk-Metallstrukturen (TS) jedes einzelnen ersten Paneels (F1).

10. Ein Verfahren gemäß Anspruch 9, wobei das Einstellen der relativen Position zwischen dem Endbereich des ersten Paneels (F1) und der Formkammer (121) mittels eines beweglichen Aufbaus (150) der Vorrichtung (100) erfolgt, wobei der besagte bewegliche Aufbau direkt an dem Auslass der Formstation (120) angeordnet ist.

## Revendications

1. Appareil (100) pour la fabrication d'un organe de coffrage (F) comprenant un premier panneau (F1) de coffrage constitué de polystyrène expansé, par une pluralité de structures métalliques en treillis (TS) agencées parallèlement les unes aux autres, ledit appareil (100) comprenant une station d'apport (110) configurée pour apporter le long d'une direction de fabrication (L) une pluralité de structures métalliques en treillis (TS) agencées parallèlement et une station de moulage (120) agencée après ladite station d'apport (110) et configurée pour recevoir à partir de celle-ci lesdites structures métalliques en treillis (TS) le long de ladite direction de fabrication (L) et pour réaliser sur une partie de celles-ci un premier panneau (F1) d'un organe de coffrage (F),
dans lequel ladite station de moulage (120) comprend une chambre de moulage (121) configurée pour l'injection de sphères ou de billes de polystyrène et leur expansion par une alimentation en vapeur, lesdites sphères ou billes étant destinées à former ledit premier panneau (F1) incorporant une partie des structures métalliques en treillis (TS), et dans lequel ladite station de moulage (120) comprend également une chambre de stabilisation dimensionnelle (122) contiguë à ladite chambre de moulage (121) et configurée pour recevoir le premier panneau (F1) formé en son sein,
l'appareil (100) comprenant en outre un ensemble de déplacement (150) agencé directement après la station de moulage (120), ledit ensemble de déplacement (150) étant configuré pour saisir une partie du premier panneau (F1) sortant de la chambre de stabilisation dimensionnelle (122) et le déplacer dans la direction de fabrication (L) sur une longueur souhaitée,
**caractérisé en ce que** l'organe de coffrage (F) comprend en outre un second panneau (F2) de coffrage constitué de polystyrène expansé, lesdits premier et second panneaux de coffrage étant immobilisés et espacés l'un de l'autre par la pluralité de structures métalliques en treillis (TS), et une chambre de moulage auxiliaire (123) est agencée entre la chambre de moulage (121) et la chambre de stabilisation dimensionnelle (122), ladite chambre de moulage auxiliaire (123) communiquant avec la chambre de moulage (121) et la chambre de stabilisation dimensionnelle (122),
et **en ce que** la chambre de moulage auxiliaire (123) est configurée pour être chauffée de manière sélective par une alimentation en vapeur.

2. Appareil (100) selon la revendication 1, dans lequel l'ensemble de déplacement (150) comprend une paire de montants (151) entre lesquels un plan (152) est agencé, le plan (152) étant immobilisé de manière mobile sur les montants (151) dans une direction verticale (V) perpendiculaire à la direction de fabrication (L), l'ensemble de déplacement (150) comprenant en outre une paire de surfaces d'appui (153) qui sont respectivement associées auxdits montants (151) et configurées pour porter les bords du premier panneau (F1) sortant de la chambre de stabilisation dimensionnelle (122), lesdits montants (151) étant mobiles dans la direction de fabrication (L) le long de rails respectifs (154).

3. Appareil (100) selon la revendication 1 ou 2, dans lequel ladite station d'apport (110) comprend une pluralité de guides (111) agencés parallèlement les uns aux autres dans la direction de fabrication (L) et espacés transversalement, chaque guide (111) comprenant une cavité configurée pour recevoir une structure métallique en treillis (TS).

4. Appareil (100) selon la revendication 3, dans lequel la station d'apport (110) comprend en outre une pluralité de préhenseurs (112) agencés au niveau de chaque guide (111) et espacés de ceux-ci dans une direction verticale (V) perpendiculaire à la direction de fabrication (L), lesdits préhenseurs (112) étant portés sur les guides (111) par une traverse (113) portée par des montants (114) qui sont mobiles dans la direction de fabrication (L) le long d'une paire de rails (115).

5. Appareil (100) selon la revendication 3 ou 4, dans lequel les guides (111) sont respectivement associés à des profilés longitudinaux (116) comprenant une pluralité de dents rétractables (117) faisant transversalement saillie à partir de ceux-ci et sollicitées vers l'extérieur par des moyens élastiques, lesdites dents rétractables (117) étant espacées de manière équidistante dans la direction de fabrication (L) et étant transversalement alignées de sorte que tous les guides (111) possèdent des jeux de dents rétractables (117) agencés aux mêmes distances par rapport à la station de moulage (120), dans lequel les dents rétractables (117) sont configurées de façon à fléchir lors d'un contact avec des entretoises transversales (TS4) des structures métalliques en treillis (TS) qui sont déplacées vers la station de moulage (120) et à entrer dans des sièges respectifs formés dans les profilés longitudinaux (116), et dans lequel les dents rétractables (117) sont également configurées de façon à sortir de leurs sièges immédiatement après le passage desdites entretoises transversales (TS4) et à diriger vers elles une surface de butée qui empêche les structures métalliques en treillis de se déplacer dans la direction opposée.

6. Appareil (100) selon l'une quelconque des revendications 1 à 5, comprenant en outre une station de déchargement (130) agencée après la station de moulage (120) dans la direction de fabrication (L) et une station de découpe (140) agencée le long de ladite station de déchargement (130) en aval de l'ensemble de déplacement (150), ladite station de découpe (140) étant configurée pour découper le premier panneau (F1) sortant de la chambre de stabilisation dimensionnelle (122) au niveau d'une partie de celui-ci exempte de structures métalliques en treillis (TS).

7. Appareil (100) selon la revendication 6, comprenant en outre une station de retournement (160) agencée en aval de la station de découpe (140) dans la direction de fabrication (L), ladite station de retournement (160) étant configurée pour retourner un premier panneau (F1) séparé par la station de découpe (140) conjointement avec les structures métalliques en treillis (TS) incorporées dans celui-ci autour d'un axe parallèle à la direction de fabrication (L).

8. Appareil (100) selon la revendication 7, comprenant en outre une station de finition (170) configurée pour placer et assembler un second panneau (F2) sur les structures métalliques en treillis (TS).

9. Processus pour la fabrication d'un organe de coffrage (F) comprenant un premier panneau (F1) de coffrage et un second panneau (F2) de coffrage constitués de polystyrène expansé, lesdits panneaux étant immobilisés et espacés l'un de l'autre par une pluralité de structures métalliques en treillis (TS) agencées parallèlement les unes aux autres dans une direction de fabrication (L), ledit processus comprenant les étapes de :
i) la fourniture d'un appareil de fabrication (100) selon l'une quelconque des revendications 1 à 8 ;
ii) l'apport d'un premier groupe de structures métalliques en treillis (TS) agencées parallèlement les unes aux autres dans une chambre de moulage (121) d'une station de moulage (120) dudit appareil (100) ;
iii) l'injection de sphères ou de billes de polystyrène dans ladite chambre de moulage (121) ;
iv) l'alimentation en vapeur de la chambre de moulage (121) afin d'amener les sphères ou les billes de polystyrène à s'expanser et à être frittées et de réaliser une partie longitudinale d'un premier panneau (F1) sur des parties des structures métalliques en treillis (TS) ;
v) le déplacement desdites structures métalliques en treillis (TS) dans la direction de fabrication (L) et le fait d'amener les parties incorporées dans la partie longitudinale du premier panneau (F1) dans une chambre de stabilisation dimensionnelle (122) de la station de moulage (120) ;
vi) la répétition des étapes iii) à v) jusqu'à ce que les structures métalliques en treillis (TS) soient totalement incorporées dans le premier panneau(F1) ;
vii) l'apport d'un second groupe de structures métalliques en treillis (TS) agencées parallèlement les unes aux autres dans la chambre de moulage (121) d'une station de moulage (120), ledit second groupe de structures métalliques en treillis (TS) étant espacé du premier groupe dans la direction de fabrication (L) ;
viii) l'ajustement de la distance dans la direction de fabrication (L) entre une extrémité arrière du premier panneau (F1) et la chambre de moulage (121) de façon à rendre partiellement ou totalement disponible le volume d'une chambre de moulage auxiliaire (123) agencée entre la chambre de moulage (121) et la chambre de stabilisation dimensionnelle (122) pour l'injection de sphères ou de billes de polystyrène, ladite étape d'ajustement étant effectuée lorsque la chambre de stabilisation dimensionnelle (122) contient complètement des parties arrière des structures métalliques en treillis (TS) du premier groupe incorporées dans le premier panneau (F1) et la chambre de moulage (121) contient des parties avant des structures métalliques en treillis (TS) du second groupe ;
ix) l'injection de sphères ou de billes de polystyrène dans la chambre de moulage (121) et la chambre de moulage auxiliaire (123) ;
x) l'alimentation en vapeur de la chambre de moulage (121) et de la chambre de moulage auxiliaire (123) ;
xi) la formation d'une partie du premier panneau (F1) exempte de structures métalliques en treillis (TS) au niveau de la chambre de moulage auxiliaire (123) ;
xii) la répétition des étapes iii) à xi) en obtenant ainsi d'un organe continu en polystyrène expansé constitué d'une série de premiers panneaux (F1) et de structures métalliques en treillis (TS) agencées parallèlement les unes aux autres ;
xiii) la séparation dudit organe continu en premiers panneaux (F1) individuels par sa découpe en correspondance de parties de liaison entre des premiers panneaux (F1) consécutifs qui sont exempts de structures métalliques en treillis (TS) ;
xiv) la fabrication d'un second panneau (F2) en polystyrène comprenant une pluralité de trous traversants configurés pour recevoir des extrémités libres d'entretoises transversales (TS4) des structures métalliques en treillis (TS) ;
xv) l'assemblage dudit second panneau (F2) en polystyrène sur les structures métalliques en treillis (TS) de chaque premier panneau (F1) individuel.

10. Processus selon la revendication 9, dans lequel l'ajustement de la position relative entre la partie arrière du premier panneau (F1) et la chambre de moulage (121) est effectuée par le biais d'un ensemble de déplacement (150) de l'appareil (100), ledit ensemble de déplacement étant agencé directement à la sortie de la station de moulage (120).
